Europäisches Patentamt

**European Patent Office**

**Office européen des brevets**

(19)

(11) Publication number: **0 178 161**
A2

(12) # EUROPEAN PATENT APPLICATION

(21) Application number: **85307217.1**

(22) Date of filing: **09.10.85**

(51) Int. Cl.⁴: **B 60 C 27/06,** B 60 C 27/10

(30) Priority: **10.10.84 NZ 209837**

(43) Date of publication of application: **16.04.86**
Bulletin 86/16

(84) Designated Contracting States: **AT BE CH DE FR GB IT LI LU NL SE**

(71) Applicant: **DEVELOPMENT FINANCE CORPORATION OF NEW ZEALAND, Development Finance Centre Corner Grey and Featherston Streets, Wellington (NZ)**

(72) Inventor: **Wishart, Donald Alexander, 23 Horoeka Street, Stokes Valley Wellington (NZ)**

(74) Representative: **Mosey, Stephen George et al, Marks & Clerk Alpha Tower Suffolk Street Queensway, Birmingham B1 1TT (GB)**

(54) **Wheel grip apparatus.**

(57) A wheel grip apparatus capable of being laid substantially flat having chains or other grip enhancing means (14) overlying the ground contact means of a vehicle wheel and held in place on the inside of the wheel by a substantially self supporting, substantially circular member (1) to be opened and closed in one position for the purpose of fitment and/or removal and on the outside by means (18, 19) to be opened in substantially diametrically opposed positions one of which preferably includes means (17) to control the tension and thus the tension of the wheel grip means over the wheel. The outside support means for the wheel grip members are engaged after location of the inside means.

1

## WHEEL GRIP APPARATUS

The present invention relates to improvements in and/or relating to the grip improvement of vehicles.

Many forms of grip enhancement apparatus are known for different vehicles. With road vehicles and to a lesser extent off-road vehicles, one of the most common forms of grip enhancement employed is the use of apparatus that includes substantially transverse members which overlie the periphery of a tyre. Such members are supported at each end by a member positioned about the periphery of the tyre so as to assume a circular condition which is substantially co-axial with the axis of rotation of the wheel. For the purposes of definition such devices hereinafter will be referred to as "chains", even if no chain elements are employed for either the peripheral member(s) or the substantially transverse grip enhancement members.

Most forms of "chains" (the term referring to one of two or four required for a four wheeled vehicle) require the driving of a wheel onto the laid out array of members or the jacking of the wheel clear of the ground. Some forms of "chains" are known which avoid these difficulties but these are generally difficult to fit and require the kneeling of the fitter which is a disadvantage in, for example, muddy, wet or snow conditions. It is therefore an object of the present invention to provide an alternative to existing forms of "chains".

Accordingly in one aspect the present invention consists in "chains" as hereinbefore defined comprising means capable of forming a substantially circular substantially self supporting member for fitment co-axially with a wheel on the inside thereof, said means (hereinafter referred to as "inside means") being capable of being opened and closed in one position,

a second substantially circular substantially self supporting means for substantially identical fitment on the other side of the wheel, said second such means (hereinafter referred to a "outside means") being capable of being opened in two positions and

a plurality of wheel grip enhancement members spanning between the two means in a number of positions so as to provide a substantially regular disposition of wheel grip enhancement means in use over the grip contacting surface of a wheel sandwiched between said inside and outside means.

Preferably the chains can be positioned so that if the inside means is closed at a top position, the outside means can be closable and/or openable at top and bottom positions.

Preferably the wheel grip enhancement members are lengths of chain.

Preferably each said means is formed of steel wire. Preferably the opening thereof can be by virtue of releasable hook type members which engage in appropriate chain links or eyelets (whether forming part of a chain or not).

Preferably the means for disposition outside of the wheel can be opened in two positions which are substantially opposite each other on a diameter of the substantially circular member.

Preferably one of the opening positions of the outside means is substantially the same as the opening position of the inside means.

Preferably the spacing of the wheel grip enhancement members is achieved by the fitment of a plurality of spacing sleeves (preferably of a rubber or plastics material) over the structural core (preferably wire) of said means, each wheel grip enhancement member thus being sandwiched by such a sleeve on either side of its region of connection or engagement around the core.

Preferably at least one of the two opening positions of the outside means includes a tensioning device or an adjustment device.

Preferably adjustment of the circumference of the inside means can be achieved by selective engagement of a hook at one end of the structural core to one of several links of a chain attached to the other end thereof.

Preferably the apparatus is substantially as hereinafter described.

In a further aspect of the present invention consists in a method of attaching "chains" when performed substantially as hereinafter described with or without reference to any of the accompanying drawings.

One preferred form of the present invention will now be described with reference to the accompanying drawings in which

Figure 1 is a perspective view of apparatus in accordance with the present invention shown from the inside of a dotted wheel, it being seen that preferably the openable portion of the inner means is positioned at the top of the wheel, the wheel grip enhancement chains positioned transversely over the tyre and held firmly in position by the subsequent engagement of the two connecting sections of the outside means, and

Figure 2 is a plan view of the "chains" in accordance with the present invention but showing the inner means in a closed condition.

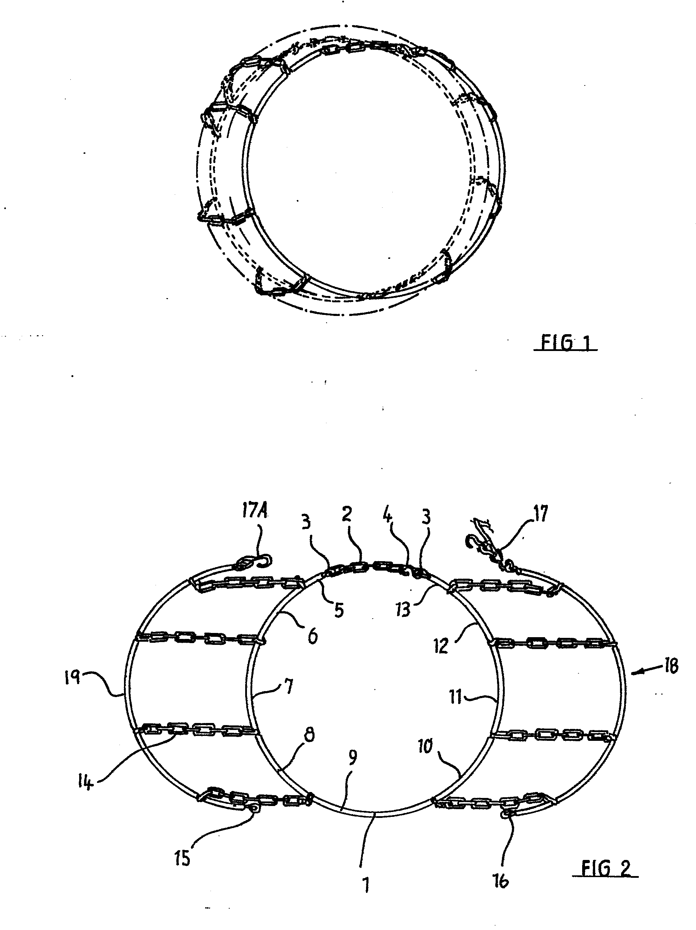

In the preferred form of the present invention ideally the inner means 1 has a length of chain 2 positioned at one end of a wire core 3 and to which selectively a hook member 4 attached to the other end of the core member 3 can be attached. This means therefore that the member 1 when open can be tucked under the axle of a wheel and engaged in a condition as shown in Figure 1. The core member 3 includes a plurality of spacing sleeves such as 5, 6, 7, 8, 9, 10, 11, 12 and 13 which locate substantially evenly about the means 1 the wheel grip enhancement chains or other members 14 with, for example, that chain indicated as 14 being located about the core 3 of the means 1 by the sandwiching sleeves 7 and 8.

The means for locating the chains or wheel grip enhancement members 14 about the outside of the wheel is substantially identical to that of means 1 save for the provision of an additional break or opening. The additional break includes preferably at one end an eyelet or the like member 15 engageable by a hook or the like member 16. The other opening preferably includes adjustable means or spring tension or the like means 17 capable of providing the necessary tightness to maintain the whole structure when fitted in a condition unlikely to fly loose.

As can be seen the two sections of the outer means 18 and 19 are preferably formed using the wire core and multiple sleeve type of construction as described in more detail in relation to the inner means.

It can be seen therefore that in use the apparatus as shown in Figure 1 would have its inner means opened, tucked under the axle and re-engaged so as to lie substantially about the axle. The two sections 18 and 19 would then, under the mudguard of the car, be pulled around to the outside of the wheel where they would then be connected using the first means 15 and 16 (hook 15 engages hook or eyelet 16) and then secondly 17 (hook 17 engages hook 17A). In achieving such a connection the wheel grip enhancement members 14 are brought about the wheel or tyre substantially in the manner as depicted in Figure 1. With the break in the outside means being substantially top and bottom fitting about the wheel of an unjacked stationary car is easy.

It is believed that apparatus in accordance with the present invention will find widespread acceptance.

CLAIMS

1.   Chains as hereinbefore defined characterised by means (1) capable of forming a substantially circular, substantially self supporting member for fitment co-axially with a wheel on the inside thereof, said means (hereinafter referred to as "inside means") being capable of being opened and closed in one position,

a second substantially circular, substantially self supporting means (18, 19) for substantially identical fitment on the other side of the wheel, said second such means (hereinafter referred to a "outside means") being capable of being opened in two positions and

a plurality of wheel grip enhancement members (14) spanning between the two means in a number of positions so as to provide a substantially regular disposition a wheel grip enhancement means in use over the grip contacting surface of a wheel sandwiched between said inside and outside means.

2.   Chains as claimed in claim 1 positionable so that if the inside means is closed at a top position relative to a wheel, the outside means can be closable and/or opened at top and bottom positions.

3.   Chains as claimed in claim 1 or claim 2 wherein each wheelgrip enhancement member is a length of chain.

4.   Chains as claimed in any one of the preceding claims wherein each of said inside means and said outside means is formed substantially of steel wire.

5.   Chains as claimed in any one of the preceding claims wherein the opening of either of said inside means and said outside means is by virtue of releasable hook type members (4, 15, 16, 17A) which engage in appropriate chain lengths, eyelets, hooks or the like.

6. Chains as claimed in any one of the preceding claims wherein said outside means can be opened in two positions which are substantially opposite each other on a diameter of the circle substantially defined thereby.

7. Chains as claimed in any one of the preceding claims wherein one of the opening positions of the outside means corresponds with respect to position about a wheel in use substantially to the opening position of the inside means.

8. Chains as claimed in any one of the preceding claims wherein the spacing of the wheel grip enhancement members is achieved by the fitment of a plurality of spacing sleeves (5-13) over a structural core of wire (3) of each of said inside means and said outside means, each wheel grip enhancement member thus being sandwiched by such a sleeve on either side of its region of connection or engagement about said wire.

9. Chains as claimed in any one of the preceding claims wherein at least one of the two opening positions of the outside means includes a tensioning device or an adjustment device (17) to ensure a tight engagement and holding of the wheel grip enhancement member against the circumference of a tyre in use.

10. Chains as claimed in any one of the preceding claims wherein an adjustment of the circumference of the inside means can be achieved by using a chain adjustment.

0178161

8

11. A method of attaching "chains" as claimed in any one of the preceding claims.

0178161

1/1

FIG 1

FIG 2